# EUROPÄISCHE PATENTSCHRIFT

(11) **EP 3 809 211 B1**
(45) Veröffentlichungstag und Bekanntmachung des Hinweises auf die Patenterteilung: **15.12.2021**
(21) Anmeldenummer: 19203237.3
(22) Anmeldetag: 15.10.2019
(51) Int. Cl.: G05B 19/042, B25J 15/00, B65G 47/74, G05B 23/02

(54) **SYSTEM MIT EINER DATENERZEUGUNGSEINHEIT IN EINEM GREIFARM**
SYSTEM WITH A DATA GENERATING UNIT IN A GRIPPING ARM
SYSTÈME AVEC UNE UNITÉ DE GÉNÉRATION DES DONNÉES DANS UN BRAS DE PRÉHENSION

(43) Veröffentlichungstag der Anmeldung: 21.04.2021
(73) Patentinhaber: Tyrolon-Schulnig GmbH, 6395 Hochfilzen (AT)
(72) Erfinder: Schulnig, Elmar, 6392 St. Jakob i.H. (AT)
(74) Vertreter: Rupprecht, Kay

(56) Entgegenhaltungen:
- DE-A1-102011 002 988
- DE-A1-102019 108 787
- US-A1- 2018 333 857

## Beschreibung

Die vorliegende Erfindung betrifft ein System mit einer Datenerzeugungseinheit.

Dabei betrifft die Erfindung das Thema "Internet of Things" (IoT), weshalb das erfindungsgemäße System auch als "Smartgripper Unit" bezeichnet wird. IoT beschreibt üblicherweise die Vernetzung von Gegenständen mit Netzwerken wie z.B. dem Internet, damit diese Gegenstände vorzugsweise selbstständig über diese Netzwerke kommunizieren und so verschiedene Aufgaben für den Besitzer erledigen können. Im deutschsprachigen Raum wird IoT auch als "Industrie 4.0" bezeichnet. Der Anwendungsbereich erstreckt sich dabei von einer allg. Informationsversorgung, über automatische Bestellungen bis hin zu Warn- und Notfallfunktionen. Dies ist insbesondere durch die steigende Datenvernetzung von Geräten, die Abrufbarkeit von Informationen, z.B. durch Mobiltelefone, sowie der verbesserten Miniaturisierung von elektronischen Komponenten möglich. Auch besteht ein Hauptaspekt des "IoT" darin, dass Gegenstände hierarchieunabhängig miteinander kommunizieren können.

Ein Greifarm, wie z.B. in der DE29713510 und WO2006/089610 bekannt ist, bildet einen Teil einer Vorrichtung, insbesondere einer Greifvorrichtung (auch "Klam-mergreifer" genannt), welche zum Bewegen eines Greifabschnitts des Greifarms von einer Öffnungsstellung in eine Greifstellung oder umgekehrt ausgebildet ist.

Diese Bewegung wird insbesondere durch ein Steuermittel kontrolliert. Der Greifarm selbst weist eine Bohrung zur Lagerung eines Lagerbolzens zum schwenkbaren Befestigen des Greifarms in der Vorrichtung, und einen Kraftspeicher zum Bewegen des Greifabschnitts des Greifarms von der Greifstellung in die Öffnungsstellung oder umgekehrt auf.

Ein solcher Greifarm ist dem Grunde nach aus dem Stand der Technik bekannt und wird bei der fließbandtechnischen Bearbeitung von Behältern verwendet. Insbesondere beim oder zum Reinigen, Befüllen oder Verschließen werden die Behälter bei einer Station mittels eines rotierenden Transport- bzw. Klammersterns, der eine Vielzahl von koaxial angeordneten Greifvorrichtungen mit mindestens einem Greifarmpaar aufweist, ergriffen und zur nächsten Station im Prozess transportiert.

Aus der US 2018/0333857 A1 ist ein Werkstück-Entnahmesystem mit einem Roboter sowie einer Hand, die an einem Handspitzenabschnitt des Roboters angebracht ist zu entnehmen. Die Hand dient zum Aufnehmen von Werkstücken. Ferner ist ein dreidimensionaler Sensor zum Erfassen von Positionsinformationen einer dreidimensionalen Punktgruppe in einem Teilbereich eines Behälter vorgesehen. Die DE 10 2019 108 787 A1 offenbart eine Handsteuerungsvorrichtung und ein Handsteuerungssystem.

Die DE 10 2011 002 988 A1 beschreibt eine Etikettiermaschine.

Unter dem Begriff "Behälter" sind nachstehend insbesondere, aber nicht ausschließlich flaschenartige Behälter zu verstehen, also zum Beispiel Getränkeflaschen aus Glas oder Kunststoff, aber auch Fläschchen für Arzneimittel oder Parfüm. Unter den Begriff fallen ebenfalls andere Glas- oder Kunststoffbehälter, die ähnlich zu einer Flasche insbesondere einen Hals oder eine zur Öffnung verjüngende Struktur aufweisen.

Beim Greifen und Transportieren von Behältern wird ein Greifarm verschiedenen Druck-, Zug- und/oder Scherkräften ausgesetzt. Diese Kräfte können zu einer Verbiegung oder gar einem Bruch des Greifarms führen und begrenzen dadurch unter anderem die Betriebslaufzeit bzw. Lebensdauer eines Greifarms.

Ebenso kommt ein Greifarm während seiner Betriebslaufzeit mit mehreren hunderttausenden Behältern in Kontakt und führt genauso oft eine Greif- oder Öffnungsbewegung aus. Dadurch werden verschiedene mechanische Komponenten des Greifarms, wie z.B. des Greifabschnitts (für den Behälter), der Bohrung (für den Lagerbolzen) und des Betätigungsabschnitts (für das Steuermittel), abgenutzt, was wiederum zu einer Fehlfunktion führen kann.

Aus dem Stand der Technik ergibt sich somit die Notwendigkeit, den Greifarm zu identifizieren, den Zustand des Greifarms, insbesondere während des Betriebs, zu ermitteln und/oder Vorhersagen über die zukünftige Betriebstauglichkeit oder die zu erwartende Lebensdauer treffen zu können. Dadurch sollen z.B. Reinigungs- und Abfüllanlagen für Flaschen besser überwacht werden können, um beispielsweise Wartungsarbeiten frühzeitig zu erkennen und kurz zu halten.

Der Erfindung liegt angesichts der zuvor genannten Nachteile und Probleme die Aufgabe zugrunde, ein System anzugeben, mit dessen Hilfe Eigenschaften und Daten eines Greifarms erfasst werden und zu einer Verteilung bereitgestellt werden.

Die Aufgabe wird erfindungsgemäß mit Blick auf das System durch den Gegenstand des Anspruchs 1 gelöst.

Bevorzugte Ausgestaltungen, Weiterbildungen und Varianten sind Gegenstand der Unteransprüche. Die im Hinblick auf die Datenerzeugungseinheit aufgeführten Vorteile und bevorzugten Ausgestaltungen sind sinngemäß auf das Verfahren, das System sowie die Verwendung zu übertragen und umgekehrt.

Konkret wird die auf das System gerichtete Aufgabe durch System gelöst, aufweisend:
- eine Greifvorrichtung zum Greifen, Halten und Führen von flaschenartigen Behältern mit Greifarmen, die jeweils einen Greifabschnitt aufweisen, welche zum schwenkbaren Bewegen der Greifabschnitte von einer Öffnungsstellung in eine Greifstellung oder umgekehrt ausgelegt sind und hierzu ein Kraftspeicher zum schwenkbaren Bewegen der Greifabschnitte von der Greifstellung in die Öffnungsstellung oder umgekehrt vorgesehen ist, wobei die Greifarme eine Datenerzeugungseinheit umfassen, wobei die Datenerzeugungseinheit eine Erfassungseinheit zur Erfassung zumindest einer Zustandsgröße der Greifvorrichtung sowie eine Datenvorverarbeitungseinheit zur Erzeugung von Zustandsdaten aus der zumindest einen erfassten Zustandsgröße aufweist, wobei die Erfassungseinheit derart ausgelegt ist, die zumindest eine Zustandsgröße ausgewählt aus
- Anzahl von Greifzyklen,
- Druckkraft, die auf die Greifvorrichtung wirkt,
- Materialermüdung, -abnutzung,
- Bruch eines Greifarms der Greifvorrichtung,
   zu erfassen;
- eine Datenübertragungseinheit sowie
- eine Datenverarbeitungseinheit,
wobei die Datenübertragungseinheit derart eingerichtet ist, die von der Datenerzeugungseinheit erzeugten Zustandsdaten der Greifvorrichtung an die Datenverarbeitungseinheit zu übertragen.

Aufgrund des IoT-Bezuges der vorliegenden Erfindung und dem bevorzugten aber nicht ausschließlichen Einsatzgebiet kann die Datenerzeugungseinheit auch als "Smartgripper Datenerzeugungseinheit" bezeichnet werden.

Unter der zumindest einen Zustandsgröße kann somit allgemein ein Information über einen mechanischen und/oder funktionsbedingten Zustand der Greifvorrichtung oder speziell des Greifarms verstanden werden.

Die Erfassung einer Anzahl von Greifzyklen, also wie oft sich der Greifarm öffnet und schließt, ist beispielsweise vorteilhaft im Hinblick auf eine Bestimmung von Wartungsintervallen, die üblicherweise nach einer vorbestimmten Anzahl an Greifzyklen zu erfolgen haben.

Der Erfassung der Druckkraft liegt der Gedanke zu Grunde, zu ermitteln, ob die Greifvorrichtung und insbesondere der Greifarm die Behälter mit einer ausreichenden Kraft greift und somit ein zuverlässiges Halten der Behälter sicherstellt. Alternativ oder ergänzend kann auch eine Druckkraft in Form einer äußeren Einwirkung zuverlässig erfasst werden. Unter der äußeren Einwirkung kann hierbei beispielsweise ein Drauftreten auf die Greifvorrichtung verstanden werden.

Die Erfassung der Materialermüdung beziehungsweise der Materialabnutzung dient einer Erfassung von Verschleißerscheinungen, um beispielsweise zu sehr verschlissene Greifarme vor einem Bruch austauschen zu können. Damit werden die Stillstandszeiten der Greifvorrichtung und somit der gesamten Maschine reduziert, da frühzeitig reagiert werden kann.

Der Erfassung eines Bruches einer Komponente der Greifvorrichtung und insbesondere eines Greifarms liegt der Gedanke zu Grunde, ebenfalls die Stillstandszeit bis die defekte Komponente ausgetauscht ist, zu reduzieren. Durch die Erfassung des Bruches und insbesondere der Lokalisierung der gebrochenen Komponente ist es ermöglicht zielgerichtet einen Austausch der gebrochenen Komponente zu veranlassen und durchzuführen, da auf eine Fehlersuche im Hinblick auf die gebrochene Komponente verzichtet werden kann.

Gemäß einer Ausführungsform weist die Erfassungseinheit einen oder mehrere Sensoren auf, der/die an der Greifvorrichtung angeordnet ist/sind, zur Erfassung der zumindest einen Zustandsgröße.

Des Weiteren ist der Sensor/sind die Sensoren hierbei bevorzugt derart an dem Greifarm angeordnet, dass sie den eigentlichen Betrieb eines Greifarms, wie z.B. das Greifen, Schwenken und Halten, nicht zu behindern. Je nach Position und/oder Anordnung am Greifarm kann die Datenerzeugungseinheit und speziell die Erfassungseinheit derart dimensioniert sein, dass sie keinen Fortsatz oder Erhebung am Greifarm bildet, die insbesondere den Betrieb des Greifarms behindert. Alternativ oder zusätzlich kann die Datenerzeugungseinheit und speziell die Erfassungseinheit in ihrer Form der Form des Greifarms angepasst sein, d.h. fluchtend und/oder stetig (ohne Sprünge oder Stufen) zur Fläche des Greifarms ausgebildet und/oder angeordnet sein.

Gemäß einer Ausführungsform ist der eine oder mehrere Sensoren als ein kapazitiver Sensor ausgebildet. Derartige Sensoren können beispielsweise als Abstandssenoren eingesetzt werden und eine Stellung des Greifarms der Greifvorrichtung erfassen. Hierbei ist beispielsweise jeweils ein Metallplättchen an sich opponierend gegenüberliegenden Greifarmen der Greifvorrichtung angeordnet. Die Metallplättchen bilden hierbei einen Plattenkondensator aus, dessen Kapazität von dem Abstand der beiden Metallplättchen abhängt. Durch das Öffnen und Schließen der Greifarme variiert der Abstand und somit die Kapazität, was einfach z.B. mittels eines Schwingkreises erfasst werden kann. Somit ist es möglich, bestimmten Kapazitätswerten bestimmte Abstände beziehungsweise Stellungen der Greifarme zuzuordnen und somit zu erfassen.

Gemäß einer Ausführungsform ist der eine Sensor oder die mehreren Sensoren als ein resistiver Sensor ausgebildet. Hierbei ist beispielsweise ein elektrisches Widerstandselement in Form eines Metallstücks an dem Greifarm angeordnet.

Speziell ist hierbei das Widerstandselement an einem Greifbereich des Greifarms angeordnet. Unter dem Greifbereich des Greifarms kann hierbei der Bereich verstanden werden, mit dem der Behälter gegriffen werden, an dem also im gegriffenen Zustand der Behälter anliegt. Das Widerstandselement hat aufgrund seines Materials und aufgrund seiner Dicke einen vorbestimmten Widerstandswert, der einfach erfasst werden kann. Dadurch, dass das Widerstandselement an dem Greifbereich angeordnet ist, ist es einer Abnutzung ausgesetzt, die sich in einer Veränderung des Widerstandswertes niederschlägt. Diese Widerstandsänderung resultiert aufgrund des sich durch die Abnutzung reduzierenden Durchmessers des Widerstandselements. Die Abnutzung des Widerstandselements kann somit im Wesentlichen mit einer Abnutzung des Greifarms korreliert werden. Fällt der Widerstandswert beispielsweise unter einen vordefinierten Wert, kann eine hinreichende Abnutzung detektiert werden, sodass ein Austausch erfolgen kann, bevor der Greifarm bricht. Alternativ kann das Widerstandselement auch im Greifbereich innerhalb des Materials des Greifarms eingebracht sein.

Alternativ kann der resistive Sensor auch als Dehnungsmessstreifen ausgebildet sein. Die Funktionsweise von Dehnungsmessstreifen beruht auf einer Widerstandsänderung aufgrund einer mechanischen Verformung des Dehnungsmessstreifens. Hierdurch ist es ermöglicht, eine auf den Greifarm wirkende Greifkraft zu ermitteln, die vorzugsweise mit einer Materialdehnung des Greifarms positiv korreliert ist. Unter positiv korreliert kann hierbei verstanden werden, dass die Greifkraft umso höher ist, je größer die Materialdehnung des Greifarms ist. Derartige Dehnungsmessstreifen weisen heutzutage eine Genauigkeit auf, bei der es ermöglicht ist, selbst intrinsische Materialdehnungen genau zu erfassen. Unter intrinsischen Materialdehnungen können hierbei Materialverformungen verstanden werden, die für das menschliche Auge nicht sichtbar sind.

Weiterhin ist gemäß einer Ausführungsform der eine Sensor oder die mehreren Sensoren als ein induktiver Sensor ausgebildet. Mittels einer derartigen Ausführungsform des Sensors/der Sensoren ist es ermöglicht, eine Anzahl der Greifzyklen und/oder einen offenen und/oder einen geschlossenen Zustand und/oder einen Öffnungswinkel und/oder eine Öffnungsgeschwindigkeit der Greifvorrichtung zu erfassen. Die Funktionsweise von induktiven Sensoren fußt üblicherweise aufgrund einer Änderung der Induktivität einer von der innerhalb des Sensors integrierten Spule aufgrund einer Relativbewegung des Sensors zu einem die Induktivität verändernden Objekt. Das Objekt weist hierzu bevorzugt ein ferromagnetisches Material auf oder ist aus einem derartigen Material gebildet. Der induktive Sensor kann beispielsweise auf dem Greifarm angeordnet sein. Durch die Bewegung des Greifarms während der Greifbewegung erfolgt hierbei die Änderung der Induktivität.

Gemäß einer alternativen oder ergänzenden Ausführungsform ist der eine oder mehrere Sensoren als ein magnetischer Sensor, z.B. als ein Hallsensor ausgebildet. Die Funktionsweise derartiger Sensoren fußt, analog zu der Funktionsweise von induktiven Sensoren, auf einer Änderung des Magnetfeldes des Magnetsensors. Hierdurch können ebenfalls eine Anzahl der Greifzyklen und/oder einen offenen und/oder einen geschlossenen Zustand und/oder einen Öffnungswinkel und/oder eine Öffnungsgeschwindigkeit der Greifvorrichtung erfasst werden.

Weiterhin alternativ oder ergänzend ist der eine oder mehrere Sensoren als ein optischer Sensor ausgebildet. Hierbei ist der optische Sensor beispielsweise ein Laser-Sensor. Hiermit ist es beispielswiese ermöglicht, einen Abstand zwischen zwei Greifarmen erfassbar und somit ein geöffneter und/oder ein geschlossener Zustand eines aus zwei Greifarmen ausgebildeten Klammergreifers.

Die vorstehend genannten Sensorausgestaltungen können in beliebiger Art und Weise kombiniert werden, um auf konfigurations- und anwendungsspezifische Anforderungen eingehen zu können. Weiterhin ist die vorstehende Aufzählung der Sensortypen nicht abschließend. Vielmehr können auch weitere Sensorarten und - typen im Sinne dieser Erfindung herangezogen werden.

Ergänzend können die Sensoren auch eine Ummantelung aufweisen. Hierdurch sind sie vor äußeren Einwirkungen, wie z.B. Feuchtigkeit und/oder Staub geschützt. Ein weiterer Vorteil der Datenerzeugungseinheit ist ihre Struktur- und/oder Materialbeschaffenheit, die es ihr erlaubt, vor, während und/oder nach dem Herstellungsprozess des Greifarms angeordnet bzw. eingesetzt zu werden. Hierzu kann die Datenerzeugungseinheit gegen hohe Temperaturen und/oder Drücke, z.B. durch eine Oberflächenisolationsschicht und/oder eine konstant bzw. gleichmäßig geformte Leitungsschichtstruktur, geschützt sein, wenn die Datenerzeugungseinheit bei einem Kunststoffspritzgussverfahren des Greifarms vom Kunststoff umschlossen wird. Sollte der Greifarm aus zumindest teilweise elektrisch leitfähigem Material bestehen, ist die Datenerzeugungseinheit gegenüber diesem Material vorzugsweise elektrisch isoliert.

Zweckdienlicherweise ist die Datenvorverarbeitungseinheit dazu eingerichtet, die erzeugten Zustandsdaten für eine Übertragung mittels einer Datenübertragungseinheit bereitzustellen. Die Bereitstellung erfolgt bevorzugt mittels der Datenvorverarbeitungseinheit im Rahmen der Erzeugung und speziell im Anschluss an die Erzeugung der Zustandsdaten. Hierbei kann alternativ oder ergänzend auch eine Filterung der Daten erfolgen bevor diese zur Übertragung bereitgestellt werden.

Bevorzugt ist die Datenerzeugungseinheit mit einer oder mehreren externen Entitäten, insbesondere mit einem Überwachungssystem derart verbindbar oder verbunden, dass in Abhängigkeit der erfassten Zustandsgröße die eine oder die mehreren externen Entitäten aktivierbar ist, zur Erzeugung von Entitätsdaten. Die Entitätsdaten können dann Teil der Zustandsdaten sein. Unter extern kann hierbei verstanden werden, dass die Entitäten kein Teil der Datenerzeugungseinheit sind. Die Datenerzeugungseinheit ist weiterhin nachrüstbar ausgebildet. Unter nachrüstbar kann hierbei verstanden werden, dass die Datenerzeugungseinheit nach Art eines Plug-and-Play-Verfahrens auf bereits montierte und sich in Nutzung befindliche Greifvorrichtungen und/oder Greifarme montierbar ist. Hierdurch wird eine Einsatzmöglichkeit der Datenerzeugungseinheit weiter erhöht.

Ferner wird im Rahmen dieser Erfindung ein Greifarm offenbart für eine Greifvorrichtung zum Greifen, Halten und Führen von insbesondere flaschenartigen Behältern, welche zum schwenkbaren Bewegen eines Greifabschnitts des Greifarms von einer Öffnungsstellung in eine Greifstellung oder umgekehrt ausgelegt sind. Hierzu ist bevorzugt ein Kraftspeicher zum schwenkbaren Bewegen des Greifabschnitts von der Greifstellung in die Öffnungsstellung oder umgekehrt. Der Greifarm weist hierbei eine Datenerzeugungseinheit auf. Bei der Datenerzeugungseinheit handelt es sich insbesondere um die bereits vorstehend beschriebene Datenerzeugungseinheit.

Weiterhin wird eine Transportvorrichtung beansprucht und offenbart mit einem vorstehend beschriebenen System.

Die Datenübertragungseinheit überträgt die von der Datenerzeugungseinheit erzeugten Daten des Greifarms an die Datenverarbeitungseinheit.

Ferner wird ein Verfahren zum Betrieb einer Datenerzeugungseinheit offenbart.

Das Verfahren umfasst die folgenden Schritte.

Zunächst wird zumindest eine Zustandsgröße einer Greifvorrichtung mittels zumindest einem Sensor erfasst. Bei dem zumindest einen Sensor handelt es sich insbesondere um die bereits im Rahmen der Datenerzeugungseinheit beschriebenen Sensoren.

Anschließend werden Zustandsdaten erzeugt, die eine Information über die erfasste Zustandsgröße enthalten.

Die erzeugten Zustandsdaten werden dann für eine Übertragung mittels einer Datenübertragungseinheit bereitgestellt.

Bevorzugt wird mittels dem zumindest einen Sensor insbesondere zumindest eine Zustandsgröße ausgewählt aus
- Anzahl von Greifzyklen
- Druckkraft, die auf die Greifvorrichtung, insbesondere auf einen Greifarm wirkt erfasst wird.
- Materialermüdung, -abnutzung
- Bruch einer Komponente der Greifvorrichtung

Zweckdienlicherweise werden zur Erzeugung der Zustandsdaten auch Entitätsdaten einer oder mehrerer externer Entitäten, insbesondere eines Überwachungssystems herangezogen. Hierdurch erhalten die erzeugten Zustandsdaten mehr Informationen für eine spätere Auswertung über einen Zustand des Greifarms und/oder der Greifvorrichtung.

Des Weiteren wird eine Verwendung einer Datenerzeugungseinheit zur Erzeugung von Zustandsdaten offenbart, die eine Information über zumindest eine erfasste Zustandsgröße einer Greifvorrichtung enthalten und zum Bereitstellen der erzeugten Zustandsdaten für eine Übertragung an eine Datenverarbeitungseinheit mittels einer Datenübertragungseinheit.

Bei der Datenerzeugungseinheit handelt es sich insbesondere um die bereits vorstehend erwähnte Datenerzeugungseinheit.

Ausführungsbeispiele der Erfindung werden nachfolgend anhand der Figuren näher erläutert. Diese zeigen in teilweise stark vereinfachten Darstellungen:
- Fig. 1: einen Greifarm einer Greifvorrichtung mit darauf angeordneter Datenerzeugungseinheit gemäß einer ersten Ausführungsform,
- Fig. 2: ein Greifarm einer Greifvorrichtung mit darauf angeordneter Datenerzeugungseinheit gemäß einer zweiten Ausführungsform,
- Fig. 3: eine Greifvorrichtung mit zwei Greifarmen und einer Datenerzeugungseinheit sowie
- Fig. 4: eine Transportvorrichtung mit einer Vielzahl an Greifvorrichtungen.

In den Figuren sind gleichwirkende Teile stets mit den gleichen Bezugszeichen dargestellt.

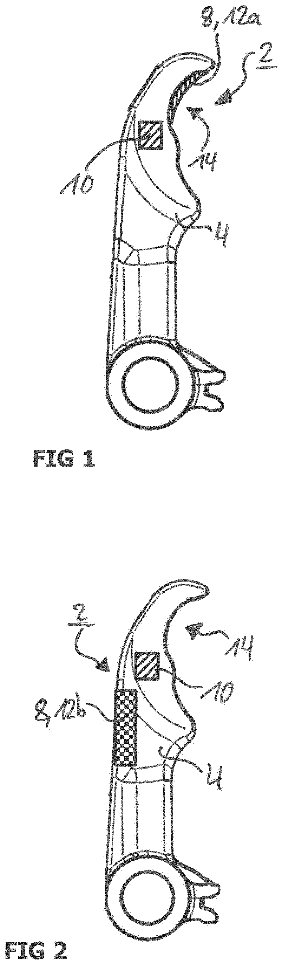

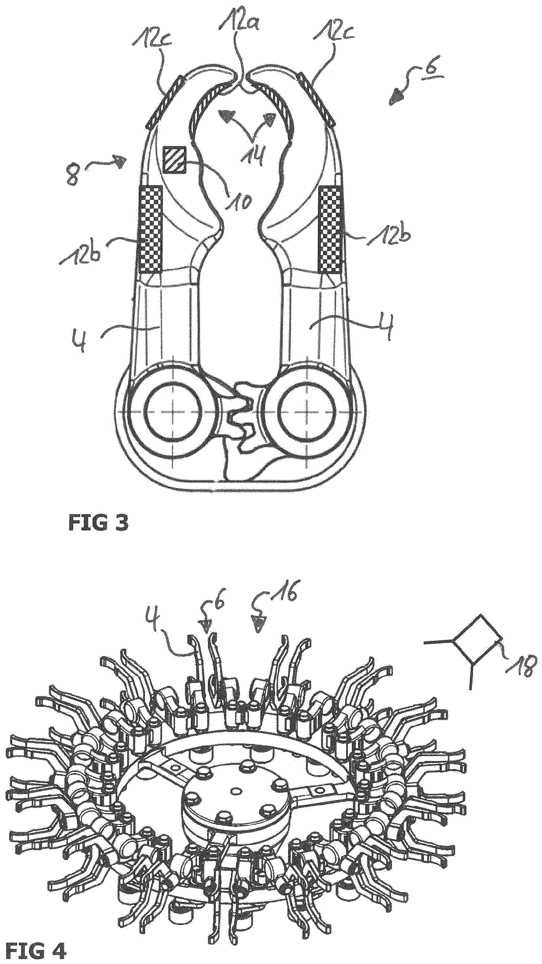

Die in Fig. 1 dargestellte Datenerzeugungseinheit 2 ist auf einem Greifarm 4 einer Greifvorrichtung 6 (vgl. Fig. 3 und Fig. 4) angeordnet. Die Datenerzeugungseinheit 2 dient zur Erzeugung von Zustandsdaten, die eine Information über eine Zustandsgröße der Greifvorrichtung 6 und speziell des Greifarms 4 enthalten. Die Greifvorrichtung 6 dient hierbei zum Greifen, Halten und Führen von insbesondere flaschenartigen Behältern (vgl. Fig. 3 und Fig. 4).

Die Datenerzeugungseinheit 2 weist hierbei eine Erfassungseinheit 8 zur Erfassung der zumindest einen Zustandsgröße auf. Unter der zumindest einen Zustandsgröße kann hierbei beispielsweise eine Anzahl von Greifzyklen der Greifvorrichtung 6, eine Druckkraft, die auf die Greifvorrichtung 6 und insbesondere auf den Greifarm 4 wirkt, eine Materialermüdung/-abnutzung sowie ein Bruch einer Komponente der Greifvorrichtung 6, insbesondere des Greifarms 4 verstanden werden. Weiterhin weist die Datenerzeugungseinheit 2 eine Datenvorverarbeitungseinheit 10 zur Erzeugung der Zustandsdaten auf. Im Ausführungsbeispiel gemäß Fig. 1 ist die Erfassungseinheit 8 durch einen Sensor 12a ausgebildet, der in einem Greifabschnitt 14 des Greifarms 4 angeordnet ist. Unter dem Greifabschnitts 14 wird hierbei der Abschnitt des Greifarms 4 verstanden, mit welchem die insbesondere flaschenartigen Behälter gegriffen werden, also mit dem die insbesondere flaschenartigen Behälter mechanisch in Kontakt treten. Die Erfassungseinheit 8 kann alternativ oder ergänzend noch weitere Sensoren 12 aufweisen.

Der Sensor 12a gemäß dem Ausführungsbeispiel nach Fig. 1 ist hierbei als ein resistiver Sensor ausgebildet, der aufgrund des elektrischen Widerstandes und/oder aufgrund einer Änderung des elektrischen Widerstandes ein Sensorsignal erzeugt. Aufgrund dessen, dass der resistive Sensor 12a im Greifabschnitts 14 des Greifarms 4 angeordnet ist, kommt dieser ebenfalls mit den insbesondere flaschenartigen Behältern (nicht gezeigt) mechanisch in Kontakt und unterliegt hierbei einer mechanischen Abnutzung. Aufgrund der mechanischen Abnutzung erfolgt ebenfalls ein Materialabtrag an dem Sensor 12, was zu einer Änderung des elektrischen Widerstandes führt. Diese Änderung des elektrischen Widerstandes ist wiederum in Form einer Änderung des erfassten Signals ermittelbar. Unterschreitet beispielsweise der elektrische Widerstand des resistiven Sensors 12a einen vordefinierten Wert, so kann auf eine entsprechend hohe Abnutzung des Greifarms 4 geschlossen werden, sodass hierbei beispielsweise frühzeitig ein Austausch des Greifarms 4 - bevor dieser bricht - erfolgen kann. Um den erfassten elektrischen Widerstand des resistiven Sensors 12a an die Datenvorverarbeitungseinheit 10 zu übertragen, ist der resistive Sensor 12a und somit die Erfassungseinheit 8 mit der Datenvorverarbeitungseinheit 10 verbunden (hier nicht dargestellt).

Die zu erfassende Zustandsgröße, welche hierbei die bereits erwähnte Materialermüdung/-abnutzung ist, ist somit mit dem erfassten elektrischen Widerstandswert des resistiven Sensors 12a korreliert. Ebenso ist hiermit ein Bruch einer Komponente und insbesondere ein Bruch des Greifarms 4 der Greifvorrichtung 6 erfassbar.

In Fig. 2 ist ein Greifarm 4 mit einer Datenerzeugungseinheit 2 gemäß einer zweiten Ausführungsform gezeigt. Der Greifarm 4 ist hierbei baugleich wie der Greifarmen 4 gemäß Fig. 1 ausgebildet. Ebenso entspricht die Datenvorverarbeitungseinheit 10 der Datenvorverarbeitungseinheit 10 gemäß Fig. 1. Die Erfassungseinheit 8 ist jedoch hierbei als ein Dehnungsmessstreifen 12b gebildet. Ein Dehnungsmessstreifen 12b ist eine Ausführungsform eines resistive Sensors 12a, dessen ermittelbarer Widerstandswert in Abhängigkeit einer Dehnung oder Stauchung des Dehnungsmessstreifens 12b variiert. Der Dehnungsmessstreifen 12b ist hierbei an einer Seite des Greifarms 4 angeordnet. Hierdurch ist beispielsweise eine Druckkraft auf den Greifarm 4 ermittelbar, die zu einer Dehnung oder Stauchung des Greifarms 4 führt. Diese Dehnung oder Stauchung überträgt sich wiederum auf den auf den Greifarmen angeordneten Dehnungsmessstreifen 12b und ist hierdurch ermittelbar. Der erfasste elektrische Widerstandswert bzw. die erfasste Änderung des elektrischen Widerstands werden an die Datenvorverarbeitungseinheit 10 übertragen. Um eine genauere Erfassung der auf den Greifarm 4 wirkenden Druckkraft zu ermöglichen, können auch mehrere Dehnungsmessstreifen 12b auf der Oberfläche des Greifarms 4 angeordnet sein. Hierdurch ist insbesondere eine örtliche Auflösung der jeweils wirkenden Druckkraft ermöglicht. Ebenso ist mittels der als Dehnungsmessstreifen 12b ausgebildeten Erfassungseinheit 8 eine äußere Einwirkung ermittelbar. Unter der äußeren Einwirkung kannwie bereits vorstehend erwähnt - beispielsweise eine Druckkraft verstanden werden, die im normalen Betrieb der Greifvorrichtung 6 nicht auftritt. Beispielsweise tritt eine ungewöhnlich hohe Druckkraft auf, wenn jemand auf die Greifvorrichtung 6 und speziell auf den Greifarm 4 drauftritt.

Fig. 3 zeigt eine Greifvorrichtung 6 mit zwei opponierend zueinander angeordneten Greifarmen 4 sowie einer Erfassungseinheit 8 mit mehreren Sensoren 12a, 12b, 12c. Hierbei ist auf jedem der Greifarme 4 jeweils ein Dehnungsmessstreifen 12b angeordnet. Weiterhin weist jeder Greifabschnitts 14 einen resistiver Sensor 12a zur Erfassung einer Materialermüdung/-abnutzung innerhalb des Greifabschnitts 14. Zusätzlich sind an einer Außenseite, also dem Greifabschnitts 14 gegenüberliegend, zwei kapazitive Sensoren 12c an der Greifvorrichtung 6 angeordnet. Hierzu weist jeweils ein Greifarm 4 einen kapazitiven Sensor 12c auf. Die beiden kapazitiven Sensoren 12c bilden so einen Plattenkondensator aus, dessen erfassbarer Kapazitätswert von einem Abstand zwischen den beiden kapazitiven Sensoren 12c abhängig ist. Öffnen sich die beiden Greifarme 4 der Greifvorrichtung 6, so vergrößert sich auch ein Abstand zwischen den beiden kapazitiven Sensoren 12c, was wiederum zu einer Kapazitätsänderung führt. Diese Kapazitätsänderung ist erfassbar und an die Datenvorverarbeitungseinheit 10 übermittelbar. Durch die erfassbare Kapazität und/oder einer Änderung der Kapazität mittels der kapazitiven Sensoren 12c ist beispielsweise eine Anzahl an Greifzyklen, also wie oft sich die Greifvorrichtung 6 öffnet und schließt, erfassbar.

Speziell sind durch die Ausgestaltung der Erfassungseinheit 8 bei der Greifvorrichtung 6 gemäß Fig. 3 mehrere Zustandsgrößen erfassbar. Zum einen ist eine Anzahl der Greifzyklen durch die bereits erwähnten kapazitiven Sensoren 12c erfassbar. Zum anderen ist eine Materialermüdung/-abnutzung innerhalb des Greifabschnitts 14 durch die resistiven Sensoren 12a erfassbar. Ferner ist eine Druckbelastung/Druckkraft, welche auf die jeweiligen Greifarme 4 wirkt, durch die Dehnungsmessstreifen 12b erfassbar. Somit ist eine Erfassung nahezu aller relevanten Zustandsgrößen der Greifvorrichtung 6 ermöglicht.

In Fig. 4 ist eine Transportvorrichtung 16 gezeigt, welche umfangsseitig eine Vielzahl von Greifvorrichtungen 6 aufweist. Deren Greifarme 4 sind hierbei radial nach außen gerichtet. Aufgrund dieser Ausgestaltung wird die Transportvorrichtung 16 auch als Transportstern bezeichnet.

Jede der Greifvorrichtungen 6 und speziell jeder Greifarm 4 der Transportvorrichtung 16 weist hierbei eine Datenerzeugungseinheit 2 mit einer Erfassungseinheit 8 und einer Datenvorverarbeitungseinheit 10 auf (nicht dargestellt). Alternativ ist lediglich eine Datenvorverarbeitungseinheit 10 für die Erfassungseinheiten 8 der Greifvorrichtungen 6 der gesamten Transportvorrichtung 16 vorgesehen. Die Erfassungseinheiten 8 weisen hierbei zumindest einen der bereits vorstehend erwähnten Sensoren 12a, 12b, 12c auf, sodass zumindest eine der ebenfalls bereits erwähnten Zustandsgrößen erfassbar ist. Durch diese Ausgestaltung ist es ermöglicht, die Zustandsgrößen einer jeden Greifvorrichtung 6 und speziell sogar jedes Greifarms 4 der Transportvorrichtung 16 zu erfassen und für eine Auswertung zur Verfügung zu stellen.

Um die erfassten Zustandsgrößen für eine Auswertung zur Verfügung zu stellen, ist die Datenvorverarbeitungseinheit 10 derart eingerichtet, aus der zumindest einen erfassten Zustandsgröße Zustandsdaten zu erzeugen. Hierbei wird die zumindest eine erfasste Zustandsgröße in einem einfachsten Fall lediglich in ein Datenformat formatiert und zu einer Übertragung mittels einer hier nicht dargestellten Datenübertragungseinheit zur Verfügung gestellt. Alternativ oder ergänzend kann auch eine Vor-Filterung der zumindest einen erfassten Zustandsgröße erfolgen, bevor diese in die Zustandsdaten überführt wird.

Weiterhin alternativ oder ergänzend ist die Datenerzeugungseinheit 2 mit einer oder mehreren externen Entitäten 18 verbindbar oder verbunden. Im Ausführungsbeispiel gemäß Fig. 4 ist eine externe Entität 18 vorgesehen, welche als ein Überwachungssystem, zum Beispiel als eine Überwachungskamera ausgebildet ist. Hierbei ist die externe Entität 18 in Abhängigkeit der zumindest einen erfassten Zustandsgröße aktivierbar und erzeugt hierbei Entitätsdaten. Konkret kann hierbei beispielsweise bei einer Erfassung einer ungewöhnlich hohen Druckbelastung auf eine oder mehrere Greifvorrichtungen 6, die als Kamera ausgebildete externe Entität 18 aktiviert werden und somit Bilddaten zur Ursache der erhöhten Druckbelastung liefern. Im Fall eines Vorhandenseins einer oder mehrerer externer Entitäten 18 sind die hiervon erzeugten Entitätsdaten ebenfalls Teil der Zustandsdaten und werden von der Datenvorverarbeitungseinheit 10 zusammen mit den oder der erfassten Zustandsgröße für eine Übertragung bereitgestellt.

### Bezugszeichenliste

- 2: Datenerzeugungseinheit
- 4: Greifarm
- 6: Greifvorrichtung
- 8: Erfassungseinheit
- 10: Datenvorverarbeitungseinheit
- 12a: resistiver Sensor
- 12b: Dehnungsmessstreifen
- 12c: kapazitiver Sensor
- 14: Greifabschnitt
- 16: Transportvorrichtung
- 18: externe Entität

## Patentansprüche

1. System aufweisend:
- eine Greifvorrichtung (6) zum Greifen, Halten und Führen von flaschenartigen Behältern mit Greifarmen (4), die jeweils einen Greifabschnitt (14) aufweisen, welche zum schwenkbaren Bewegen der Greifabschnitte (14) von einer Öffnungsstellung in eine Greifstellung oder umgekehrt ausgelegt sind und hierzu ein Kraftspeicher zum schwenkbaren Bewegen der Greifabschnitte (14) von der Greifstellung in die Öffnungsstellung oder umgekehrt vorgesehen ist, wobei die Greifarme (4) eine Datenerzeugungseinheit (2) umfassen, wobei die Datenerzeugungseinheit (2) eine Erfassungseinheit (8) zur Erfassung zumindest einer Zustandsgröße der Greifvorrichtung (6) sowie eine Datenvorverarbeitungseinheit (10) zur Erzeugung von Zustandsdaten aus der zumindest einen erfassten Zustandsgröße aufweist, wobei die Erfassungseinheit (8) derart ausgelegt ist, die zumindest eine Zustandsgröße ausgewählt aus
- Anzahl von Greifzyklen,
- Materialermüdung, -abnutzung,
- Bruch eines Greifarms (4) der Greifvorrichtung (6), zu erfassen;
- eine Datenübertragungseinheit sowie
- eine Datenverarbeitungseinheit,
wobei die Datenübertragungseinheit derart eingerichtet ist, die von der Datenerzeugungseinheit (2) erzeugten Zustandsdaten der Greifvorrichtung (6) an die Datenverarbeitungseinheit zu übertragen.

2. System nach Anspruch 1,
**dadurch gekennzeichnet, dass**
die Erfassungseinheit (8) einen oder mehrere Sensoren (12) aufweist, der/die an der Greifvorrichtung (6) angeordnet ist/sind, zur Erfassung der zumindest einen Zustandsgröße.

3. System nach dem vorhergehenden Anspruch,
**dadurch gekennzeichnet, dass**
der eine oder mehrere Sensoren (12) als ein kapazitiver Sensor (12c) ausgebildet ist.

4. System nach Anspruch 2,
**dadurch gekennzeichnet, dass**
der eine oder die mehreren Sensoren (12) als ein resistiver Sensor (12a) ausgebildet ist.

5. System nach Anspruch 2,
**dadurch gekennzeichnet, dass**
der eine oder die mehreren Sensoren (12) als ein induktiver Sensor ausgebildet ist.

6. System nach Anspruch 2,
**dadurch gekennzeichnet, dass**
der eine oder mehrere Sensoren (12) als ein magnetischer Sensor ausgebildet ist.

7. System nach Anspruch 2,
**dadurch gekennzeichnet, dass**
der eine oder mehrere Sensoren (12) als ein optischer Sensor ausgebildet ist.

8. System nach einem der vorhergehenden Ansprüche,
wobei die Greifarme (4) mit einer oder mehreren externen Entitäten (18), insbesondere mit einem Überwachungssystem verbindbar oder verbunden ist, derart, dass die Datenerzeugungseinheit (2) der Greifarme (4) in Abhängigkeit der erfassten Zustandsgröße die eine externe Entität (18) oder die mehreren externen Entitäten (18) aktiviert, zur Erzeugung von Entitätsdaten.

9. Transportvorrichtung (16) für flaschenartige Behälter mit einem System nach einem der vorhergehenden Ansprüche.

## Claims

1. A system comprising:
- a gripping device (6) for gripping, holding and guiding bottle-like containers having gripping arms (4), each with a respective gripping section (14), designed to pivotably move the gripping sections (14) from an open position into a gripping position or vice versa with an energy store being thereto provided for pivotably moving the gripping sections (14) from the gripping position into the open position or vice versa, wherein the gripping arms (4) comprise a data generating unit (2), wherein the data generating unit (2) has a detection unit (8) for detecting at least one status variable of the gripping device (6) as well as a data preprocessing unit (10) for generating status data from the at least one detected status variable, wherein the detection unit (8) is designed so as to detect the at least one status variable selected from among
- number of gripping cycles,
- material fatigue / wear,
- breakage of a gripping arm (4) of the gripping device (6);
- a data transmission unit, as well as
- a data processing unit,
wherein the data transmission unit is configured so as to transmit the status data of the gripping device (6) generated by the data generating unit (2) to the data processing unit.

2. The system according to claim 1,
**characterized in that**
the detection unit (8) comprises one or more sensors (12) which is/are arranged on the gripping device (6) for detecting the at least one status variable.

3. The system according to one of the preceding claims,
**characterized in that**
the one or more sensor (12) is/are designed as a capacitive sensor (12c).

4. The system according to claim 2,
**characterized in that**
the one or more sensor (12) is/are designed as a resistive sensor (12a).

5. The system according to claim 2,
**characterized in that**
the one or more sensor (12) is/are designed as an inductive sensor.

6. The system according to claim 2,
**characterized in that**
the one or more sensor (12) is/are designed as a magnetic sensor.

7. The system according to claim 2,
**characterized in that**
the one or more sensor (12) is/are designed as an optical sensor.

8. The system according to one of the preceding claims,
wherein the gripping arms (4) are connectable or connected to one or more external entities (18), in particular to a monitoring system, such that the data generating unit (2) of the gripping arms (4) activates the external entity (18) or plurality of external entities (18) as a function of the detected status variable in order to generate entity data.

9. A transport device (16) for bottle-like containers having a system according to one of the preceding claims.

## Revendications

1. Système comprenant:
- un dispositif de préhension (6) pour saisir, maintenir et guider des récipients en forme de bouteille avec des bras de préhension (4) qui présentent chacun une portion de préhension (14) et qui sont conçus pour le mouvement pivotant des portions de préhension (14) depuis une position d'ouverture jusque dans une position de préhension ou inversement, et il est prévu à cet effet un accumulateur de force pour le mouvement pivotant des portions de préhension (14) depuis la position de préhension jusque dans la position d'ouverture ou inversement, les bras de préhension (4) comprenant une unité de génération de données (2), l'unité de génération de données (2) comprenant une unité de détection (8) pour détecter au moins une variable d'état du dispositif de préhension (6) et une unité de prétraitement de données (10) pour générer des données d'état à partir de ladite au moins une variable d'état détectée, l'unité de détection (8) étant conçue pour détecter ladite au moins une variable d'état sélectionnée parmi
-- un nombre de cycles de préhension,
-- la fatigue des matériaux, l'usure des matériaux,
-- la rupture d'un bras de préhension (4) du dispositif de préhension (6);
- une unité de transmission de données, et
- une unité de traitement de données,
dans lequel l'unité de transmission de données est conçue pour transmettre les données d'état du dispositif de préhension (6) générées par l'unité de génération de données (2) à l'unité de traitement de données.

2. Système selon la revendication 1,
**caractérisé en ce que**
l'unité de détection (8) comprend un ou plusieurs capteurs (12) disposé(s) sur le dispositif de préhension (6) pour détecter ladite au moins une variable d'état.

3. Système selon la revendication précédente,
**caractérisé en ce que**
ledit ou lesdits capteurs (12) est/sont réalisé(s) sous forme de capteur capacitif (12c).

4. Système selon la revendication 2,
**caractérisé en ce que**
ledit ou lesdits capteurs (12) est/sont réalisé(s) sous forme de capteur résistif (12a).

5. Système selon la revendication 2,
**caractérisé en ce que**
ledit ou lesdits capteurs (12) est/sont réalisé(s) sous forme de capteur inductif.

6. Système selon la revendication 2,
**caractérisé en ce que**
ledit ou lesdits capteurs (12) est/sont réalisé(s) sous forme de capteur magnétique.

7. Système selon la revendication 2,
**caractérisé en ce que**
ledit ou lesdits capteurs (12) est/sont réalisé(s) sous forme de capteur optique.

8. Système selon l'une des revendications précédentes,
dans lequel les bras de préhension (4) peuvent être connectés ou sont connectés à une ou à plusieurs entités externes (18), en particulier à un système de surveillance, de telle sorte que l'unité de génération de données (2) des bras de préhension (4) met à l'état actif ladite entité externe (18) ou lesdites plusieurs entités externes (18) en fonction de la variable d'état détectée, pour générer des données d'entité.

9. Dispositif de transport (16) pour récipients en forme de bouteille, comprenant un système selon l'une des revendications précédentes.
